(19) Europäisches Patentamt
European Patent Office
Office européen des brevets

(11) Veröffentlichungsnummer: **0 079 972**
**B1**

(12) # EUROPÄISCHE PATENTSCHRIFT

(45) Veröffentlichungstag der Patentschrift: **02.05.85**

(51) Int. Cl.⁴: **C 01 B 33/26**, C 09 C 1/42, C 07 C 149/46, C 09 D 5/04

(21) Anmeldenummer: **81109769.0**

(22) Anmeldetag: **19.11.81**

(54) **Verfahren zur Herstellung von tertiären Sulfoniummontmorilloniten und ihre Verwendung.**

(43) Veröffentlichungstag der Anmeldung: **01.06.83 Patentblatt 83/22**

(45) Bekanntmachung des Hinweises auf die Patenterteilung: **02.05.85 Patentblatt 85/18**

(84) Benannte Vertragsstaaten: **AT BE CH DE FR GB IT LI LU NL SE**

(56) Entgegenhaltungen:
**DE-A-1 091 997**
**US-A-2 531 427**
**US-A-3 671 190**
**US-A-4 136 103**

(73) Patentinhaber: **C.F. Spiess & Sohn GmbH & Co. Chemische Fabrik, D-6719 Kleinkarlbach (DE)**

(72) Erfinder: **Himmelreich, Rolf G., Uhlandstrasse 9, D-6718 Grünstadt (DE)**
Erfinder: **Spiess, Wolfram, Dr. Dipl.-Chem., Heinrich-Becker-Strasse 16, D-6718 Grünstadt (DE)**

(74) Vertreter: **Eggert, Hans-Gunther, Dr., Räderscheidtstrasse 1, D-5000 Köln 41 (DE)**

**EP 0 079 972 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf die Herstellung von tertiären Sulfoniummontmorilloniten durch Umsetzung von Montmorillonit mit tertiären Sulfoniumsalzen in einem wässerigen Milieu und die Verwendung der so erhaltenen tertiären Sulfoniummontmorillonite als Thixotropierungsmittel.

Montmorillonit ist ein natürlich vorkommendes Dreischichten-Aluminium-Hydrosilikat der allgemeinen Formel $Al_2O_3 \cdot 4\,SiO_2 \cdot H_2O + n\,H_2O$, bei dem eine aluminiumhaltige Octaederschicht jeweils zwischen zwei Siliciumdioxid-Tetraederschichten liegt. Weil einige der Gitterplätze des Aluminiums durch zweiwertige Kationen, wie Magnesium, und einige Siliciumatome gegen dreiwertige Kationen, wie Aluminium, ausgetauscht sind, ergeben sich Ladungsdefizite, die im natürlichen Montmorillonit meist durch Natriumionen ausgeglichen sind. Montmorillonit besteht somit aus zweidimensionalen unendlichen Makroanionen, welche über die dazwischen liegenden Kationen elektrostatisch vernetzt sind. Aufgrund dieses Aufbaus hat der Montmorillonit die Fähigkeit, Kationen auszutauschen.

Aus der US-A Nr. 2531427 ist es bekannt, von Tonen, deren Kationen austauschbar sind, u. a. auch von Montmorilloniten, durch Umsetzung mit Oniumsalzen, Oniummontmorillonite herzustellen, die gelbildende Eigenschaften haben. Dementsprechend werden in erster Linie aus Wyoming-Bentonit, bei dem es sich im wesentlichen um das Natriumsalz der Montmorillonitsäure handelt, durch Umsetzung mit Alkylammoniumverbindungen, von denen wenigstens eine Kette mehr als 10 Kohlenstoffatome hat, entsprechende Alkylammoniumbentonite hergestellt. In einem Beispiel dieser Patentschrift wird auch die Umsetzung von Didodecyläthylsulfoniumbromid mit dem Wyoming-Bentonit in wässeriger Suspension beschrieben. Hierbei entsteht der entsprechende Sulfoniummontmorillonit aber nur in sehr schlechter Qualität, d. h. völlig unzureichenden gelbildenden Eigenschaften, weil ein Ionenaustausch zwischen dem Sulfoniumbromid und dem Montmorillonit nur in geringem Masse stattfindet und ein wesentlicher Teil des Sulfoniumbromids nur oberflächlich vom Montmorillonit adsorbiert wurde. Weil es bisher nicht gelang, technisch verwendbare tertiäre Sulfoniummontmorillonite herzustellen, haben von den beschriebenen Oniummontmorilloniten auch nur quaternäre Ammoniummontmorillonite technische Verwendung als thixotrope Substanzen gefunden.

Der Erfindung liegt die Aufgabe zugrunde, neue thixotrope Substanzen zu entwickeln, die einfach herzustellen sind und hervorragende thixotrope Eigenschaften in organischen Medien haben und nicht den Zusatz von Aktivatoren erfordern, wie das insbesondere bei quaternären Ammoniummontmorilloniten der Fall ist.

Gegenstand der Erfindung ist ein Verfahren zur Herstellung von tertiären Sulfoniummontmorilloniten durch Umsetzung von Montmorillonit mit tertiären Sulfoniumsalzen in einem wässerigen Milieu, dadurch gekennzeichnet, dass man ein tertiäres Sulfoniumsalz der allgemeinen Formel

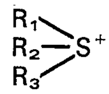 $X^-$ (I)

verwendet, in der

$X^-$ das Alkylsulfatanion 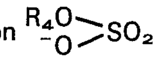 oder, wenn $R_3 = HOOC{-}CH_2{-}$ ist, auch Chlorid bedeutet,

$R_1$ eine geradkettige oder verzweigte Alkylgruppe mit 8 bis 24 Kohlenstoffatomen,

$R_2$ eine Alkylgruppe mit 1 bis 24 Kohlenstoffatomen, die ab $C_8$ auch verzweigt sein kann,

$R_3$ einen niederen Alkylrest mit 1 bis 4 Kohlenstoffatomen, einen Benzylrest oder, wenn $X^- = Cl^-$, auch die Carboximethylgruppe, und

$R_4$ einen niederen Alkylrest mit 1 bis 4 Kohlenstoffatomen bedeutet.

Es gibt nur wenige natürliche Vorkommen mit reinem Natriummontmorillonit in der Welt. Daher wird man im allgemeinen darauf angewiesen sein, den Montmorillonit aus einem Bentonit durch Reinigung und Anreicherung in möglichst hochaktiver Form zu gewinnen. Für die Herstellung der tertiären Sulfoniummontmorillonite kann man sowohl hochwertige Natriummontmorillonite, z. B.: einen natürlichen Natriummontmorillonit aus Südafrika, als auch gereinigte Bentonite geringerer Qualität einsetzen. Zur Herstellung der erfindungsgemässen Substanzen werden Bentonite mit einem möglichst hohen Anteil an Montmorillonit verwendet. Den Montmorillonitgehalt eines Betonits kann man durch physikalische Methoden z. B.: durch Dekantieren, Sedimentieren oder Zentrifugieren erhöhen. Es ist ausserdem wichtig, dass der Montmorillonit in möglichst kationenreicher Form vorliegt. In der Praxis kann man besonders Natriummontmorillonit, Calciummontmorillonit oder Ammoniummontmorillonit einsetzen. Dabei wird dem Natriummontmorillonit aus wirtschaftlichen Gründen allgemein der Vorzug gegeben. Die Anreicherung eines Bentonits mit Natriumionen lässt sich durch Behandeln einer wässerigen Suspension mit Natriumchlorid oder anderen Natriumsalzen, wie Natriumcarbonat oder Natriumacetat, erreichen. Ebenso kann man einen Ammoniummontmorillonit durch Behandeln mit Ammoniumchlorid oder anderen Ammoniumsalzen in wässeriger Suspension erhalten. Auch mit Calcium oder Magnesium angereicherte Montmorillonite stellt man in entsprechender Weise her. Die Aktivität, das ist die Ionenaustauschkapazität eines Montmorillonits oder eines mit Montmorillonit angereicherten Bentonits, lässt sich bestimmen, indem man eine Probe mit Dodecylammoniumacetat in wässeriger Mischung 4 h lang mechanisch rührt und den Überschuss an Dodecylammoniumacetat bestimmt. Die Aktivität eines guten Montmorillonits sollte mindestens 80 mEq/100 g betragen, besser bei 150 mEq/100 g liegen. Je höher die Aktivität eines Montmorillonits ist, desto mehr Sulfoniumionen können aufgenommen werden.

Bei den erfindungsgemäss zur Herstellung der tertiären Sulfoniummontmorillonite eingesetzten tertiären Sulfoniumsalzen der obigen allgemeinen Formel I handelt es sich entweder um tertiäre Sulfoniumalkylsulfate oder Dialkylcarboxymethylsulfoniumchloride. Diese Ausgangsprodukte des erfindungsgemässen Verfahrens sind zum Teil, wie z. B. die Dimethyldodecyl-, oder -hexadecyl-, oder -octadecylsulfoniummethylsulfate (Beilstein 1, III, 1791, 1824, 1838) oder Methyldodecylcarboximethylsulfoniummethylsulfat (Beilstein 3, IV, 607) bekannt oder nach analogen Verfahren zugänglich. Trialkylsulfoniumsalze lassen sich leicht durch Erhitzen von Dialkylsulfiden mit Diniederalkylsulfaten, insbesondere Dimethylsulfat oder Diäthylsulfat, herstellen. Diese Reaktion lässt sich schematisch durch die nachfolgende Gleichung III darstellen, in der $R_3$ die gleiche Bedeutung wie $R_4$ hat.

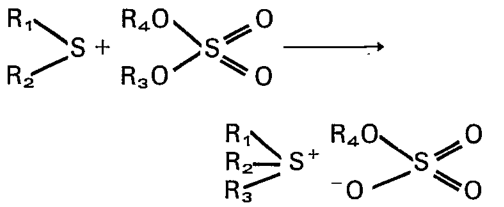

(III)

Man erhitzt die Dialkylsulfide mit dem Diniederalkylsulfat auf Temperaturen zwischen 80 und 150° C, am besten auf 110 bis 120° C. Je nach der Art des verwendeten Dialkylsulfids oder Alkylsulfats beträgt die Reaktionsdauer 1 bis 20 h und verläuft insbesondere bei Verwendung von Dimethyl- oder Diäthylsulfat quantitativ. Die Reaktion kann durch Titration von Proben mit 0,1 N Kaliumbromid/Kaliumbromat-Lösung in Eisessig oder Dimethylformamid unter Zusatz geringer Mengen konzentrierter Salzsäure verfolgt werden.

Trialkylsulfoniumalkylsulfate der allgemeinen Formel

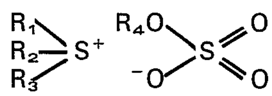

in der $R_1$ die obige Bedeutung hat und $R_2$, $R_3$ und $R_4$ einen niederen Alkylrest mit 1 bis 4 Kohlenstoffatomen, insbesondere Methyl oder Äthyl, bedeuten, lassen sich nach dem folgenden Reaktionsschema, in dem Dimethylsulfat als Beispiel des Diniederalkylsulfats gewählt wurde, leicht herstellen.

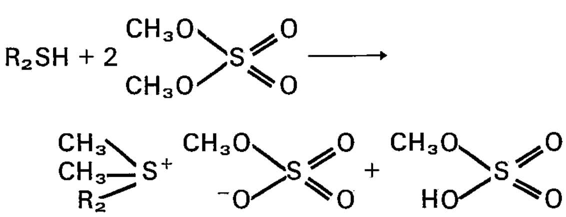

Dabei sind Reaktionstemperaturen von 90° C meistens ausreichend. Höhere Temperaturen sind zu vermeiden, da dann eine Disproportionierung der Methylschwefelsäure zu Dimethylsulfat und Schwefelsäure erfolgen kann. Letztere würde das gebildete Sulfoniumsalz zersetzen.

Die Herstellung von Dialkylcarboxymethylsulfoniumchloriden geschieht vorzugsweise durch Umsetzung von Dialkylsulfiden mit Chloressigsäure. Dabei erhält man Carboxymethylsulfoniumchloride der allgemeinen Formel

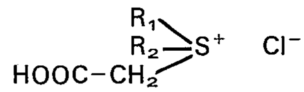

Auch diese Umsetzung wird zweckmässig bei Temperaturen von 110 bis 150° C durchgeführt. Insbesondere mit Dialkylsulfiden bis zu einer Kettenlänge von $C_{12}$ werden gute Ausbeuten erzielt.

Selbstverständlich ist die Herstellung der erfindungsgemäss einzusetzenden tertiären Sulfoniumalkylsulfate oder Dialkylcarboxymethylsulfoniumchloride nicht auf die beschriebenen Umsetzungen beschränkt, sondern kann auch nach anderen, dem Chemiker bekannten präparativen Methoden erfolgen. Die bei den beschriebenen Reaktionen verwendeten Mercaptane und Dialkylsulfide sind bekannt und in vielen Fällen handelsüblich. Generell lassen sich Dialyklsulfide mit gleicher Kettenlänge leicht durch Umsetzen eines Halogenalkans mit Natriumsulfid herstellen. Gemischte Dialkylsulfide können durch Umsetzung eines Mercaptans mit einem Halogenalkan in Gegenwart von Lauge in alkoholischer oder wässeriger Lösung erhalten werden.

Die für die Herstellung von tertiären Sulfoniummontmorilloniten verwendeten Sulfoniumsalze müssen mindestens einen langkettigen Alkylrest enthalten, der zwischen 8 und 24 Kohlenstoffatome enthält. Sie können aber auch zwei langkettige Alkylrest gleicher oder ungleicher Kettenlänge enthalten, die ausserdem noch verzweigt sein können.

Alle diese Sulfoniumsalze, auch die der gemischten Dialkylsulfide sind in Form ihrer Methyldialkylsulfoniummethylsulfate präparativ leicht zugänglich.

Tertiäre Sulfoniumsalze sind im allgemeinen in kaltem Wasser schwerer löslich als quaternäre Ammoniumsalze. Enthält das Sulfoniumsalz aber nur eine lange Alkylkette, dann ist es in heissem Wasser klar löslich, so sind z. B.: Dimethyldodecylsulfoniummethylsulfat oder Dimethyloctadecylsulfoniummethylsulfat in heissem Wasser klar löslich, wobei man für letzteres allerdings mehr Wasser benötigt. Methyldialkylsulfoniummethylsulfate, wie z. B.: Methyldioctadecylsulfoniummethylsulfat, quellen und gelieren in heissem Wasser. Erst beim Abkühlen beginnt das Gel wieder auszukristallisieren. Noch höhere Methyldialkylsulfoniumsalze, wie z. B.: Methyldidocosylsulfoniummethylsulfat, lassen sich in heissem Wasser zumindest emulgieren. Wenn das Sulfoniumsalz in einer dieser drei Formen vorliegt, also entweder gelöst, geliert oder emulgiert, lässt sich das Sulfoniumion durch Ionenaustausch in den Montmorillonit einbauen.

Für die Herstellung der tertiären Sulfoniummontmorillonite wird also das tertiäre Sulfoniumalkylsulfat oder das Dialkylcarboxymethylsulfoniumchlorid als wässerige Lösung oder Emulsion

eingesetzt, wobei die Emulsion auch die Konsistenz eines Hydrogels haben kann.

Der Montmorillonit wird zweckmässig in fester Form, d. h. als trockenes Pulver, in die wässerige Lösung oder Emulsion der tertiären Sulfoniumsalze eingetragen. Diese Arbeitsweise hat den Vorteil, dass man mit Wassermengen auskommt, die um einen Faktor von 2 bis 10 geringer sind als die bei der Herstellung der quaternären Ammoniumsalze üblichen, was vor allem bei der technischen Herstellung dieser tertiären Sulfoniummontmorillonite ein wesentlicher Vorteil ist.

Die wässerigen Lösungen oder Emulsionen der tertiären Sulfoniumsalze oder das Reaktionsgemisch werden zweckmässig auf eine Temperatur von 50 bis 100° C erwärmt. In vielen Fällen lässt sich die Reaktion aber auch durchaus mit kaltem Wasser in vertretbaren Reaktionszeiten durchführen.

Es wurde gefunden, dass tertiäre Sulfoniummontmorillonite auch vorteilhaft hergestellt werden können, wenn man Sulfoniumsalze mit Montmorilloniten vermahlt oder fein vermischt und dieses Gemisch unter mechanischem Rühren in Wasser einträgt. Dabei ist es günstig, vor allem bei Verwendung schwer löslicher Sulfoniumsalze, in siedendem Wasser zu arbeiten und die Mischung noch 5 min bis maximal 2 h am Sieden zu halten.

Die nach einer der beschriebenen Methoden erhaltene wässerige Mischung wird noch eine Zeitlang mechanisch gerührt. Im allgemeinen genügen 30 bis 90 min, bei Verwendung besonders langkettiger Sulfoniumsalze kann auch ein Zeitraum bis zu 8 d günstig sein. Nach beendeter Reaktion wird vom Ungelösten abgesaugt. Der Rückstand wird mit Wasser ausgewaschen und getrocknet. Man erhält je nach Art des verwendeten Montmorillonits farblose, beige oder grau gefärbte Pulver mit guten thixotropen Eigenschaften. Diese erfindungsgemäss hergestellten tertiären Sulfoniummontmorillonite quellen und gelieren in unpolaren oder wenig polaren Lösungsmitteln auf ein Vielfaches ihres ursprünglichen Volumens und geben mit 5% Wirkstoff steife, fast durchsichtige oder trübe Pasten mit guten thixotropen Eigenschaften. Während bei den quaternären Ammoniummontmorilloniten der Zusatz eines sogenannten Aktivators erforderlich ist, um z. B. in Xylol eine steife Paste zu erhalten, ist ein solcher Zusatz bei den erfindungsgemäss hergestellten tertiären Sulfoniummontmorilloniten in der Regel überflüssig, weil man auch ohne Aktivatoren schon eine steife Paste erhält. Sofern aus irgendwelchen Gründen Aktivatoren erwünscht sind, verwendet man stark polare Lösungsmittel, wie Methanol und Äthanol oder Aceton.

Man kann bei den tertiären Sulfoniummontmorilloniten die thixotropen Eigenschaften noch wesentlich steigern, wenn man zu den Sulfoniummontmorilloniten noch gewisse Mengen an Montmorillonit zumischt. Es ergibt sich eine Steigerung der Thixotropie zunehmend bei Zusatz von 1 bis 30° C Montmorillonit, berechnet auf die eingesetzte Menge an tertiärem Sulfoniummontmorillonit. Dabei kann man das zusätzliche Montmorillonit schon vorher zumischen oder auch in die fertige Paste geben. Ein zunächst klares, durchscheinendes Gel trübt sich nach Zugabe von zusätzlichem Montmorillonit jedoch zunehmend ein. Bei Verwendung in Pigmentlacken oder Bitumenanstrichen stört dies aber nicht.

Die thixotropen Eigenschaften der tertiären Sulfoniummontmorillonite verhindern bei Zusatz zu Farben und Lacken das Abtropfen, sie verbessern das Absetzverhalten der Pigmente, sie verbessern die Verstreichbarkeit, Glanzunterschiede verschiedener Lacke werden verhindert, und sie geben den Lacken ein homogenes Aussehen. Ausserdem werden Oberflächenstörungen, wie z. B. Risse, beim Aushärten der Lacke verhindert, und es lassen sich demzufolge dickere Filmschichten auftragen, was ein mehrmaliges Überstreichen überflüssig macht.

Die tertiären Sulfoniummontmorillonite können eingesetzt werden in Alkyldharzlacken, Öllackfarben, Epoxidlacken, in Schiffsfarben und Antifoulinganstrichen, weiterhin in Nitrolacken, Polyurethanlacken, Polyesterlacken, Vinylharzlacken, Siliconlacken und Chlorkautschuklacken. Sie können ausserdem eingesetzt werden in Strassenmarkierungsanstrichen, in Bitumenanstrichen, Abbeizmitteln, Druckfarben, aber auch in Klebstoffen, Spachtelmassen, Kitten und Schmierfetten.

Da die Viskosität bei steigenden Temperaturen weitgehend konstant bleibt, sind die tertiären Sulfoniummontmorillonite auch besonders geeignet zum Einsatz in Einbrennlacken, in Schmierölen und Schmierfetten.

*Beispiele:*

Die Herstellung der tertiären Sulfoniummontmorillonite kann nach drei einander ähnlichen Methoden erfolgen, die in den Beispielen 1 bis 3 beschrieben sind. In Beispiel 4 sind Substanzen mit guten thixotropen Eigenschaften aufgeführt, die nach einer der drei Methoden hergestellt werden.

*Beispiel 1:*

*Methyläthyldodecylsulfoniummontmorillonit*

10,7 g Methyläthyldodecylsulfoniummethylsulfat werden in 100 ml Wasser unter Erwärmen gelöst. Unter mechanischem Rühren gibt man dazu im Verlauf von 10 min aus einem Dosiertrichter 20 g Montmorillonit einer Aktivität von 152 mEq/100 g. Die Mischung wird noch 90 min lang weiter gerührt. Vom Ungelösten wird abgesaugt. Der Rückstand wird mit Wasser nachgewaschen und im Vakuum im Exsiccator über einem Trocknungsmittel getrocknet. Es werden 25,1 g eines farblosen Pulvers erhalten, das sehr gute thixotrope Eigenschaften hat. Es werden bei diesem Versuch 88,74% des eingesetzten Sulfoniumsalzes vom Montmorillonit aufgenommen, dies kann durch Bestimmung des bei der Umsetzung freiwerdenden Natriummethylsulfats ermittelt werden.

*Beispiel 2:*

*Methyltetradecyloctadecylsulfoniummontmorillonit*

14,6 g Methyltetradecyloctadecylsulfoniummethylsulfat werden mit 200 ml Wasser 5 min lang zum Sieden erhitzt, bis ein einheitliches Gel entstanden ist. Unter mechanischem Rühren dosiert man dazu im Verlauf von 5 min 20,0 g des gleichen Montmorillonits wie in Beispiel 1. Die Mischung wird noch 90 min lang weiter gerührt. Dann wird vom Ungelösten abgesaugt. Der Rückstand wird mit Wasser nachgewaschen und im Trockenschrank bei 110°C getrocknet. Es werden 25,4 g eines farblosen Pulvers erhalten, das sehr gute thixotrope Eigenschaften hat. Es werden 77,68% des Sulfoniumsalzes umgesetzt.

*Beispiel 3:*

*Methyldidocosylsulfoniummontmorillonit*

In einer Reibschale werden 23,3 g Methyldidocosylsulfoniummethylsulfat mit 20,0 g des gleichen Montmorillonits wie in Beispiel 1 feinst verrieben. 200 ml Wasser werden unter mechanischem Rühren am Rückflusskühler zum Sieden erhitzt. Dazu dosiert man aus einem Dosiertrichter im Verlauf von 10 min die oben hergestellte Pulvermischung. Unter fortgesetztem Rühren wird die Mischung noch 2 h lang zum gelinden Sieden erhitzt. Danach wird die Heizung abgestellt und noch 90 min lang weiter gerührt. Vom Ungelösten wird abgesaugt. Der Rückstand wird mit Wasser nachgewaschen und im Vakum im Rotationsverdampfer bei einer Badtemperatur von 50°C getrocknet. Es werden 31,8 g eines schwach gelblich gefärbten Pulvers erhalten, das hervorragende thixotrope Eigenschaften hat. Es haben 65,14% des Sulfoniumsalzes mit dem Montmorillonit reagiert, was aus der Menge an freigewordenem Natriummethylsulfat berechnet werden kann.

*Beispiel 4:*

In der folgenden Tabelle 1 sind eine Reihe von tertiären Sulfoniummontmorilloniten aufgeführt, die nach einer der in den Beispielen 1 bis 3 angeführten Methoden hergestellt werden können. Dabei können die, in den Beispielen 1 bis 3, angeführten Bedingungen noch variiert werden. So kann die Reaktionsdauer von 30 min bis 8 d bei Zimmertemperatur variiert werden. Die Kochdauer in Beispiel 3 kann von 5 min bis maximal 4 h variieren. Ausserdem können die Mengenverhältnisse Sulfoniumsalz zu Montmorillonit zwischen 80 mEq/100 g Montmorillonit und 200 mEq/100 g betragen, wobei diese Änderung allerdings Auswirkungen auf die thixotropen Eigenschaften des Produktes hat. Die Trocknungsbedingungen können gleichfalls variiert werden, doch sollten Trocknungstemperaturen über 150°C vermieden werden.

In der Tabelle 1 ist auch die Viskosität für die einzelnen tertiären Sulfoniummontmorillonite angegeben. Sie ist zwar kein Mass für die thixotropen Eigenschaften dieser Verbindungen. Es zeigte sich jedoch, dass je höher die Viskosität ist, desto besser sind die thixotropen Eigenschaften, deshalb wurde sie als nützliche Vergleichszahl mit angegeben. Die Viskosität wurde in 6%igen Pasten gemessen, die wie folgt hergestellt wurden: 12,0 g tertiärer Sulfoniummontmorillonit wurden mit 184,8 g Xylol 15 min lang im Ultraschallbad behandelt, dann wurde die Mischung von 3,0 g Methanol und 0,2 g Wasser zugesetzt und nochmals 15 min lang im Ultraschallbad behandelt. Nach 24 h Stehen wurde in der Mischung die Viskosität gemessen. Dazu wurde ein Haake-Rotationsviskotester VT 24 mit der Messeinrichtung MV II verwendet. Die Rotationsgeschwindigkeit betrug 0,7 tr/min.

Die Versuche in Tabelle 1 wurden mit verschiedenen Montmorilloniten durchgeführt, um zu zeigen, dass die verschiedensten Typen zur Herstellung von thixotrop wirksamen tertiären Sulfoniummontmorilloniten Verwendung finden können. Diese Typen sind im Folgenden näher be-

Montmorillonit SA ist ein natürlicher Natriummontmorillonit aus Südafrika.

Bentonit SF wird von der Firma Serva, Heidelberg, gehandelt.

Bentonit Greenbond ist ein Produkt der Südchemie, München.

Bentonite Microfine NF BC wird von der Firma American Colloid CO., Skokie I11., geliefert.

Montmorillonit Nr. 5, aus Bentonit SF, wurde erhalten durch Behandlung von Bentonit SF mit 5%iger Natriumchloridlösung und Sedimentation.

Montmorillonit Nr. 10, aus Bentonit Greenbond, wurde durch Behandeln von Bentonit Greenbond mit 0,25%iger wässeriger Natriumchloridlösung und Sedimentation erhalten.

Montmorillonit Nr. 11, aus Bentonit Greenbond, wurde durch Behandeln von Bentonit Greenbond mit einer 0,45%igen Natriumhypochloritlösung und Sedimentation erhalten.

*(Tabelle auf der nächsten Seite)*

*Vergleichsbeispiel* (nach Beispiel IV der US-A Nr. 2531427)

1/10 mol (47,9 g) Didodecyläthylsulfoniumbromid wurde in 1 l Wasser dispergiert und unter Rühren mit 400 ml einer 2½%igen Suspension von Wyoming-Bentonit vermischt. Nach einstündigem Stehen wurde filtriert, getrocknet und gemahlen. Dann wurde die Viskosität in Xylol in der Weise bestimmt, wie das oben in Beispiel 4 beschrieben ist. Die Viskosität bei 0,7 tr/min war kleiner als 320 mPa·s. Das ist der niedrigste Wert, der mit dem in Beispiel 4 beschriebenen Viskotester gemessen werden kann.

*Beispiel 5:*

In der Tabelle 2 sind die Viskositäten einiger tertiärer Sulfoniummontmorillonite angegeben. Die Viskosität wurde mit dem Viskotester VT 24 der Firma Haake, Karlsruhe, bei verschiedenen Geschwindigkeiten des Rotationskörpers der Messeinrichtung MV II gemessen. Die Ergebnisse zeigen bei allen Substanzen bei hohen Geschwindigkeiten geringe Viskositäten und bei geringen Geschwindigkeiten hohe Viskositäten. In diesen Messergebnissen drückt sich das thixotrope Verhalten dieser Substanzen aus. Auch hier wurden die Messungen in Pasten mit 6% Wirkstoff vorgenommen, deren Herstellung in Beispiel 4 beschrieben wurde. Die in Tabelle 2 eingesetzten Sulfoniummontmorillonite wurden mit einem natürlichen Montmorillonit aus Südafrika hergestellt.

*Tabelle 1*

*Tertiäre Sulfoniummontmorillonite*

| Nr. | eingesetzter Montmorillonit | eingesetzte Sulfoniumverbindung | Herstellung nach Beispiel Nr. | % Sulfonium rest im Produkt | Viskosität (mPa·s) bei 0,7 tr/min |
|---|---|---|---|---|---|
| A | Montmorillonit SA | Dimethyldodecylsulfoniummethylsulfat | 1 | 14,8 | 35 251 |
| B | Bentonit SF | Dimethyldodecylsulfoniummethylsulfat | 1 | 31,0 | 17 800 |
| C | Montmorillonit SA | Dimethylhexadecylsulfoniummethylsulfat | 1 | 37,3 | 17 900 |
| D | Montmorillonit SA | Dimethyloctadecylsulfoniummethylsulfat | 1 | 27,8 | 67 565 |
| E | Montmorillonit Nr. 11 | Dimethyloctadecylsulfoniummethylsulfat | 1 | 31,8 | 16 200 |
| F | Bentonite Microfine NF BC | Dimethyloctadecylsulfoniummethylsulfat | 1 | 24,9 | 20 500 |
| G | Montmorillonit Nr. 5 | Dimethyl-2-octyldodecyl-(1)-sulfonium-methylsulfat | 2 | 35,6 | 15 900 |
| H | Montmorillonit SA | Methyläthyldodecylsulfoniummethylsulfat | 3 | 29,9 | 39 168 |
| I | Montmorillonit SA | Methyläthyldodecylsulfoniummethylsulfat | 1 | 31,8 | 39 168 |
| J | Montmorillonit SA | Methyldodecylcarboximethylsulfoniumchlorid | 2 | 17,0 | 15 850 |
| K | Montmorillonit SA | Methyloctyloctadecylsulfoniummethylsulfat | 2 | 35,6 | 35 251 |
| L | Bentonit SF | Methyloctyloctadecylsulfoniummethylsulfat | 2 | 28,7 | 12 730 |
| M | Montmorillonit SA | Methyldidecylsulfoniummethylsufat | 1 | 30,9 | 15 250 |
| N | Montmorillonit SA | Methyldiundecylsulfoniummethylsulfat | 2 | 33,9 | 14 800 |
| O | Montmorillonit SA | Methyldiisotridecylsulfoniummethylsulfat | 2 | 31,7 | 19 500 |
| P | Bentonit, Greenbond | Methyldipentadecylsulfoniummethylsulfat | 2 | 26,8 | 12 280 |
| Q | Montmorillonit SA | Methyldodecyloctadecylsulfoniummethylsulfat | 2 | 41,0 | 24 500 |
| R | Montmorillonit SA | Methyldioctadecylsulfoniummethylsulfat | 3 | 40,2 | 19 800 |
| S | Montmorillonit Nr. 10 | Methyldioctadecylsulfoniummethylsulfat | 2 | 31,3 | 17 100 |
| T | Montmorillonit SA | Methyldieicosylsulfoniummethylsulfat | 3 | 42,5 | 30 410 |
| U | Montmorillonit Nr. 11 | Methyldieicosylsulfoniummethylsulfat | 3 | 35,1 | 29 300 |
| V | Montmorillonit Nr. 5 | Methyldieicosylsulfoniummethylsulfat | 3 | 34,6 | 25 200 |
| W | Montmorillonit Nr. 10 | Methyldidocosylsulfoniummethylsulfat | 3 | 38,6 | 35 280 |
| X | Montmorillonit SA | Methyldidocosylsulfoniummethylsulfat | 3 | 43,2 | 37 120 |

*Tabelle 2*

| tr/min<br>Viskosität (mPa·s) | 22,6 | 11,3 | 5,66 | 2,83 | 1,44 | 0,7 |
|---|---|---|---|---|---|---|
| Dimethyloctadecylsulfoniummontmorillonit | 3610 | 6732 | 12 240 | 22 032 | 40 637 | 67 565 |
| Methyläthyldodecylsulfoniummontmorillonit | 3213 | 6120 | 11 016 | 17 136 | 24 480 | 39 168 |
| Methyloctyloctadecylsulfoniummontmorillonit | 2631 | 5018 | 9 302 | 17 136 | 23 500 | 35 251 |
| Dimethyldodecylsulfoniummontmorillonit | 3244 | 6487 | 10 771 | 13 954 | 22 522 | 35 251 |

*Beispiel 6:*

In diesem Beispiel wird das thixotrope Verhalten der erfindungsgemässen tertiären Sulfoniummontmorillonite an der Substanz Dimethyloctadecylsulfoniummontmorillonit näher beschrieben.

Die hier gefundenen Ergebnisse gelten, wenn auch in etwas abgeschwächter Form, für alle anderen tertiären Sulfoniummontmorillonite, die entsprechend den Beispielen 1 bis 4 hergestellt wurden.

Durch Zusatz von Montmorillonit zu tertiären Sulfoniummontmorilloniten kann die Viskosität und damit das thixotrope Verhalten wesentlich gesteigert werden. Dies verdeutlicht die Tabelle 3, die die Viskosität bei einer Rotationsgeschwindigkeit von 0,7 tr/min bei den oben in Verbindung mit Tabelle 1 beschriebenen Bedingungen für Dimethyloctadecylsulfoniummontmorillonit mit wechselnden Mengen des als Ausgangsprodukt verwendeten Montmorillonits einer Aktivität von 152 mEq/100 g zeigt. Dabei ist gleichgültig, ob man den Montmorillonit mit dem tertiären Sulfoniummontmorillonit vorher mischt oder zur fertigen Paste aus dem Sulfoniummontmorillonit und Xylol gibt. Die Einarbeitung muss auf alle Fälle mechanisch erfolgen, entweder durch Behandeln mit Ultraschall oder mit einem schnellrührenden Rührwerk.

*Tabelle 3*

| Montmorillonit (%) | 0 | 2 | 5 | 10 | 20 | 30 |
|---|---|---|---|---|---|---|
| Viskosität (mPa·s) | 63 500 | 72 200 | 80 000 | 110 000 | 183 000 | 272 000 |

*Beispiel 7:*

Tabelle 4 zeigt das thixotrope Verhalten von Dimethyloctadecylsulfoniummontmorillonit in verschiedenen Lösungsmitteln. Dabei wurde anstelle des Xylols bei der Herstellung der 6%igen Paste, wie in Beispiel 4 beschrieben, ein anderes Lösungsmittel eingesetzt. Gemessen wurde gleichfalls mit dem Viskotester VT 24 von Haake und der Messeinrichtung MV II bei einer Geschwindigkeit des Rotationskörpers von 0,7 tr/min.

*Tabelle 4*

| Lösungsmittel | Viskosität (mPa·s) |
|---|---|
| Xylol | 67 500 |
| Petroleum | 64 500 |
| Petroleumbenzin, Kp. 40-70° C | 58 800 |
| Testbenzin | 47 100 |
| Terpentinersatz | 35 400 |
| Paraffinöl | 23 700 |
| Diisopropyläther | 6 000 |

## Patentansprüche

1. Verfahren zur Herstellung von tertiären Sulfoniummontmorilloniten durch Umsetzung von Montmorillonit mit tertiären Sulfoniumsalzen in einem wässerigen Milieu, dadurch gekennzeichnet, dass man ein tertiäres Sulfoniumsalz der allgemeinen Formel

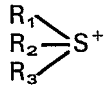 $X^-$ (I)

verwendet, in der

$X^-$ das Alkylsulfatanion 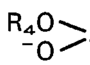 oder, wenn $R_3$ = HOOC−$CH_2$− ist, auch Chlorid bedeutet,

$R_1$ eine geradkettige oder verzweigte Alkylgruppe mit 8 bis 24 Kohlenstoffatomen,

$R_2$ eine Alkylgruppe mit 1 bis 24 Kohlenstoffatomen, die ab $C_8$ auch verzweigt sein kann,

$R_3$ einen niederen Alkylrest mit 1 bis 4 Kohlenstoffatomen, einen Benzylrest oder, wenn $X^-=Cl^-$, auch die Carboximethylgruppe, und

$R_4$ einen niederen Alkylrest mit 1 bis 4 Kohlenstoffatomen bedeutet.

2. Verfahren nach Anspruch 1, dadurch gekennzeichnet, dass $R_3$ und $R_4$ einen Methyl- oder Äthylrest bedeuten.

3. Verfahren nach einem der Ansprüche 1 oder 2, dadurch gekennzeichnet, dass das tertiäre Sulfoniumalkylsulfat oder das Dialkylcarboxymethylsulfoniumchlorid als wässerige Lösung oder Emulsion eingesetzt werden.

4. Verfahren nach einem der Ansprüche 1 bis 3, dadurch gekennzeichnet, dass ein Montmorillonit einer Kationenaustauscherkapazität von mindestens 80 mEq/100 g, insbesondere 130 bis 160 mEq/100 g eingesetzt wird.

5. Verfahren nach einem der Ansprüche 1 bis 4, dadurch gekennzeichnet, dass der Montmorillonit als trockenes Pulver in die wässerige Lösung oder Emulsion der tertiären Sulfoniumsalze eingetragen wird.

6. Verfahren nach einem der Ansprüche 1 bis 5, dadurch gekennzeichnet, dass die wässerigen Lösungen oder Emulsionen der tertiären Sulfoniumsalze oder das Reaktionsgemisch auf eine Temperatur von 50 bis 100° C erwärmt werden.

7. Verwendung von tertiären Sulfoniummontmorilloniten der allgemeinen Formel

$Mont^-$ 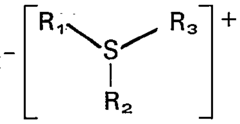 (II)

in der

$Mont^-$ das Anion eines Montmorillonits mit einer Kationenaustauscherkapazität von mindestens 80, insbesondere 130 bis 160 mEq/100 g,

$R_1$ eine geradkettige oder verzweigte Alkylgruppe mit 8 bis 24 Kohlenstoffatomen,

$R_2$ eine Alkylgruppe mit 1 bis 24 Kohlenstoffatomen, wobei die Alkylkette ab $C_8$ auch verzweigt sein kann,

$R_3$ einen niederen Alkylrest mit 1 bis 4 Kohlenstoffatomen, den Benzylrest oder die Carboximethylgruppe bedeuten,

wobei $R_1$ und $R_2$ nicht Dodecyl sind, wenn $R_3$ Äthyl ist, als Thixotropierungsmittel.

8. Verwendung von tertiären Sulfoniummontmorilloniten gemäss Anspruch 7, wobei $R_1$ eine geradkettige oder verzweigte Alkylgruppe mit 8 bis 24 Kohlenstoffatomen und $R_2$ und $R_3$ Methyl oder Äthyl bedeuten, als Thixotropierungsmittel.

9. Verwendung von Dimethyldodecylsulfoniummontmorillonit als Thixotropierungsmittel.

10. Verwendung von Dimethyloctadecylsulfoniummontmorillonit als Thixotropierungsmittel.

11. Verwendung von Methyläthyldodecylsulfoniummontmorillonit als Thixotropierungsmittel.

12. Verwendung von Methyloctyloctadecylsulfoniummontmorillonit als Thixotropierungsmittel.

13. Verwendung von Methyldidocosylsulfoniummontmorillonit als Thixotropierungsmittel.

14. Verwendung von tertiären Sulfoniummontmorilloniten nach einem der Ansprüche 7 bis 13 in Kombination mit 1 bis 30 Gew.-% Montmorillonit als Thixotropierungsmittel.

## Claims

1. Method for the production of tertiary sulphonium montmorillonites by the reaction of montmorillonite with tertiary sulphonium salts in an aqueous medium, characterized in that a tertiary sulphonium salt of the general formula

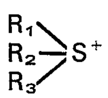 $X^-$ (I)

is used, in which

$X^-$ is the alkylsulphate anion 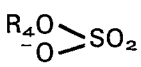 or, if $R_3$ is = $HOOC-CH_2-$, also the chloride anion,

$R_1$ is a straight chain or branched alkyl group with 8 to 24 carbon atoms,

$R_2$ is an alkyl group with 1 to 24 carbon atoms, which may also be branched from $C_8$,

$R_3$ is a lower alkyl radical with 1 to 4 carbon atoms, a benzyl radical or, if $X^- = Cl^-$, also the carboxymethyl group, and

$R_4$ is a lower alkyl radical with 1 to 4 carbon atoms.

2. Method according to Claim 1, characterized in that $R_3$ and $R_4$ are a methyl or ethyl radical.

3. Method according to Claim 1 or 2, characterized in that the tertiary sulphonium alkyl sulphate or the dialkyl carboxymethyl sulphonium chloride is used in the form of an aqueous solution or emulsion.

4. Method according to one of Claims 1 to 3, characterized in that a montmorillonite having a cation-exchange capacity of at least 80 mEq/100 g, in particular from 130 to 160 mEq/100 g, is used.

5. Method according to one of Claims 1 to 4, characterized in that the montmorillonite is introduced as a dry powder into the aqueous solution or emulsion of the tertiary sulphonium salts.

6. Method according to one of Claims 1 to 5, characterized in that the aqueous solutions or emulsions of the tertiary sulphonium salts or the reaction mixture are heated to a temperature of from 50 to 100° C.

7. The use as a thixotroping agent of tertiary sulphonium montmorillonites of the general formula

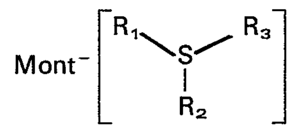 (II)

in which

$Mont^-$ is the anion of a montmorillonite with a cation-exchange capacity of at least 80, in particular from 130 to 160 mEq/100 g,

$R_1$ is a straight chain or branched alkyl group with 8 to 24 carbon atoms,

$R_2$ is an alkyl group with 1 to 24 carbon atoms, where the alkyl chain may also be branched from $C_8$,

$R_3$ is a lower alkyl radical with 1 to 4 carbon atoms, the benzyl radical or the carboxymethyl group,

where $R_1$ and $R_2$ are not dodecyl if $R_3$ is ethyl.

8. The use as a thixotroping agent of tertiary sulphonium montmorillonites according to Claim 7, where $R_1$ is a straight chain or branched alkyl group with 8 to 24 carbon atoms and $R_2$ and $R_3$ are methyl or ethyl.

9. The use of dimethyl-dodecyl-sulphonium-montmorillonite as a thixotroping agent.

10. The use of dimethyl-octadecyl-sulphonium-montmorillonite as a thixotroping agent.

11. The use of methyl-ethyl-dodecyl-sulphonium-montmorillonite as a thixotroping agent.

12. The use of dimethyl-octyl-octadecyl-sulphonium-montmorillonite as a thixotroping agent.

13. The use of methyl-didocosyl-sulphonium-montmorillonite as a thixotroping agent.

14. The use as a thixotroping agent of tertiary sulphonium montmorillonites according to one of Claims 7 to 13 in combination with 1 to 30% by weight montmorillonite.

## Revendications

1. Procédé de préparation de dérivés de sulfonium ternaire de montmorillonites par réaction d'une montmorillonite avec des sels de sulfonium ternaire dans un milieu aqueux, caractérisé en ce que l'on utilise un sel de sulfonium ternaire de formule générale

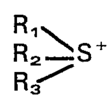 $X^-$ (I)

dans laquelle

$X^-$ représente l'anion alkylsulfate 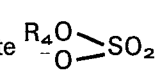

ou bien encore, lorsque $R_3$ = $HOOC-CH_2-$, l'anion chlorure,

$R_1$ représente un groupe alkyle à chaîne droite ou ramifiée en $C_8$-$C_{24}$,

$R_2$ représente un groupe alkyle en $C_1$-$C_{24}$ qui peut également être ramifié à partir du carbone $C_8$,

$R_3$ représente un groupe alkyle inférieur en $C_1$-$C_4$, un groupe benzyle ou bien encore, lorsque $X^- = Cl^-$, le groupe carboxyméthyle, et

$R_4$ représente un groupe alkyle inférieur en $C_1$-$C_4$.

2. Procédé selon la revendication 1, caractérisé en ce que $R_3$ et $R_4$ représentent un groupe méthyle ou éthyle.

3. Procédé selon l'une des revendications 1 ou 2, caractérisé en ce que l'on utilise l'alkylsulfate de sulfonium ternaire ou le chlorure de dialkylcarboxyméthylsulfonium à l'état de solution ou d'émulsion aqueuse.

4. Procédé selon l'une des revendications 1 à 3, caractérisé en ce que l'on utilise une montmorillonite ayant une capacité d'échange d'ions d'au moins 80 mEq/100 g et plus spécialement de 130 à 160 mEq/100 g.

5. Procédé selon l'une des revendications 1 à 4, caractérisé en ce que l'on introduit la montmorillonite à l'état de poudre sèche dans la solution ou émulsion aqueuse des sels de sulfonium ternaire.

6. Procédé selon l'une des revendications 1 à 5, caractérisé en ce que l'on chauffe les solutions ou émulsions aqueuses des sels de sulfonium ternaire ou le mélange de réaction à une température de 50 à 100° C.

7. Utilisation des dérivés de sulfonium ternaire de montmorillonites de formule générale

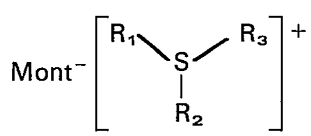

(II)

dans laquelle

$Mont^-$ représente l'anion d'une montmorillonite ayant une capacité d'échange de cations d'au moins 80 et, plus particulièrement, de 130 à 160 mEq/100 g,

$R_1$ représente un groupe alkyle à chaîne droite ou ramifiée en $C_8$-$C_{24}$,

$R_2$ représente un groupe alkyle en $C_1$-$C_{24}$, la chaîne alkyle pouvant être ramifiée à partir du carbone $C_8$,

$R_3$ représente un groupe alkyle inférieur en $C_1$-$C_4$, le groupe benzyle ou le groupe carboxyméthyle, et

$R_1$ et $R_2$ ne pouvant représenter des groupes dodécyle lorsque $R_3$ représente un groupe éthyle, en tant qu'agents conférant des propriétés thixotropiques.

8. Utilisation des dérivés de sulfonium ternaire de montmorillonites selon la revendication 7, dans lesquels $R_1$ représente un groupe alkyle à chaîne droite ou ramifiée en $C_8$-$C_{24}$ et $R_2$ et $R_3$ représentent des groupes méthyle ou éthyle, en tant qu'agents conférant des propriétés thixotropiques.

9. Utilisation du dérivé de diméthyldodécylsulfonium de montmorillonite en tant qu'agent conférant des propriétés thixotropiques.

10. Utilisation du dérivé de diméthyloctadécylsulfonium de montmorillonite en tant qu'agent conférant des propriétés thixotropiques.

11. Utilisation du dérivé de méthyléthyldodécylsulfonium de montmorillonite en tant qu'agent conférant des propriétés thixotropiques.

12. Utilisation du dérivé de méthyloctyloctadécylsulfonium de montmorillonite en tant qu'agent conférant des propriétés thixotropiques.

13. Utilisation du dérivé de méthyldidocosylsulfonium de montmorillonite en tant qu'agent conférant des propriétés thixotropiques.

14. Utilisation des dérivés de sulfonium ternaire de montmorillonites selon les revendications 7 à 13 en combinaison avec 1 à 30% en poids de montmorillonite en tant qu'agents conférant des propriétés thixotropiques.